# EUROPEAN PATENT SPECIFICATION

(11) **EP 2 704 598 B1**
(45) Date of publication and mention of the grant of the patent: **25.10.2017**
(21) Application number: 12731646.1
(22) Date of filing: 02.05.2012
(51) Int. Cl.: A23L 2/02, A23L 2/56, C12J 1/08

(54) **DRINK**
GETRÄNK
BOISSON

(30) Priority: 03.05.2011 IT MO20110095
(43) Date of publication of application: 12.03.2014
(73) Proprietor: Acetaia Giuseppe Cremonini S.r.l., 41057 Spilamberto (MO) (IT)
(72) Inventor: FERRARI, Alberto, 41057 Spilamberto (MO) (IT)
(74) Representative: Brunacci, Marco
(86) International application number: PCT/IB2012/000843
(87) International publication number: WO 2013/050828

(56) References cited:
- EP-A1- 1 231 257
- WO-A1-03/055971
- WO-A1-2009/150675
- DE-A1- 10 325 797
- JP-A- 2000 125 823
- KR-A- 20090 036 366

## Description

### Technical Field

The present invention relates to a drink.

### Background Art

It is known how the need is particularly felt in many industrial and artisan business activity sectors to renew products and to find new ones in order to more strongly distinguish them from those of the competition.

Such need is particularly felt in the "beverage" sector dedicated to the preparation and the distribution of drinks suitable for human consumption.

To cater to the above need, non-alcoholic, cold or hot drinks are known, prepared with a concentrated dose of product (orange juice, lemon juice, etc.) which is diluted with normal water (still drinks) or with water saturated with carbon dioxide (sparkling drinks).

Besides the need to offer drinks of diversified taste with respect to those of the competition, it is underlined that in this sector, the search is increasingly gaining ground for drinks which are highly thirst quenching and which, at the same time, are able to provide the user with a relative well-being, e.g., because they are able to integrate salts or other mineral substances (sport drinks and energy drinks).

Such needs often remain unsatisfied however.

The drinks currently known on the market in fact hardly ever manage to combine the fact of being thirst-quenching drinks with the fact that they provide well-being, and when they do manage to do so they usually have a fairly unpleasant taste and flavour.

Besides this, it must be underlined that most of the drinks currently on the market and which are said to provide beneficial effects for users, are in fact only able to provide the human organism with a quantity of vitamins, salts and other mineral substances which, however beneficial, have no curative or therapeutic type properties.

A particular type of drink is disclosed in the patent document EP 1 231 257.

### Description of the Invention

The main aim of the present invention is to provide a drink which allows to satisfy the above mentioned needs.

In particular, the purpose of the present invention is to provide a drink which, on the one hand, is thirst-quenching and tasty as regards flavour and, on the other hand, has not only beneficial, but also therapeutic properties for the user. Another object of the present invention is to provide a drink which allows to overcome the mentioned drawbacks of the state of the art within the ambit of a simple, rational, easy and effective to use as well as low cost solution.

The above objects are achieved by the present drink having the features cited in claim 1.

### Brief Description of the Drawings

Other characteristics and advantages of the present invention will become more evident from the description of a preferred, but not sole, embodiment of a process for obtaining the drink, illustrated purely as an example but not limited to the annexed drawings in which:

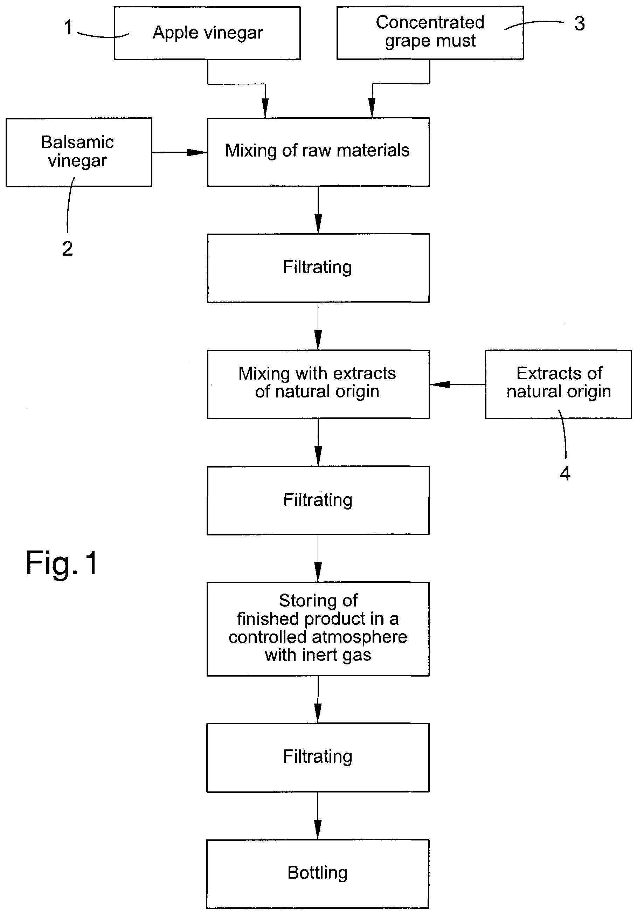

figure 1 is a block diagram of the process for obtaining the drink according to the invention.

### Embodiments of the Invention

The invention is best described by the product claim 1 and process claims 6-9. The drink according to the invention comprises a mix of apple vinegar 1, balsamic vinegar 2, and concentrated grape must 3, and extracts of natural origin 4.

Apple vinegar 1 is meant as a product made by refining cider or apple must by means of an acidification process.

The apple vinegar 1 has beneficial and therapeutic properties, including refreshing, antibacterial, antioxidant, hypotensive, hypoglycaemic and anti-cancer properties and preventive action against osteoporosis and anti-inflammatory action on the mouth and throat cavity.

Usefully, the balsamic vinegar 2 is of the PGI balsamic vinegar of Modena type, as defined on the basis of EEC regulation 583 / 2009 dated 3 July 2009.

The concentrated grape must 3 is meant as liquid sugar obtained from grape must by means of depuration and subsequent concentration.

According to EU regulations, the concentrated grape must is defined as: "non-caramelized liquid product obtained using any partial dehydration means, except direct fire, originating from specific recommended or authorised varieties produced by the Community, totally deprived of its ionic components".

In particular, in the present invention, the concentrated grape must 3 advantageously has a natural ratio of glucose and fructose substantially equal to 50%, i.e., out of a total of 100 g of sugar, 50 g are glucose and 50 g are fructose. The use of fructose is justified by the fact that this sugar is about 1.5 times sweeter than sucrose and about 3 times sweeter than glucose.

For this reason, its use allows obtaining a product with a lower calorie content. Besides this, the fructose has a pleasant flavour which recalls that of ripe fruit. Usefully, the mix can contemplate the addition of extracts of natural origin 4.

The extracts of natural origin are chosen from the list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin.

The presence of bilberry, strawberry and other extracts permits providing the drink with pleasant and appealing aromas and flavours and, at the same time, enriching it with substances useful for the health inasmuch as, for example, rich in vitamins and antioxidant compounds.

Similar functions are also attributable to the above extracts of oenological origin, e.g., obtained from the skins and pulp of grapes and generally known as phenolic compounds.

The phenolic compounds in fact are highly beneficial to human health because of their antioxidant and free radical scavenging properties, including the protective effects against brain degeneration processes, anti-inflammatory effects, anti-cancer action, anti-atherogenic action and heart protection action.

Phenolic compounds such as catechins, proanthocyanidins, monomer and oligomer flavanes are among the most active substances as regards antioxidant activity.

In particular, grape seed extracts, mainly made up of flavonoids, above all catechin and epicatechin (also present as gallic esters), in the form of monomers, dimers and trimers, have strong antioxidant and free radical scavenging properties.

Besides these substances, widely present in the oenological field, other polyphenols exist which are interesting in terms of their beneficial capacities: quercetin and rutin, which are highly effective in preventing the platelet aggregation and the development of tumor growth, or resveratrol.

Usefully, the mix comprises apple vinegar 1, balsamic vinegar 2, concentrated grape must 3 and extracts of natural origin 4 in the following weight concentrations, meaning with respect to the total weight of the mix:

| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 % |

More in detail, the mix comprises apple vinegar 1, balsamic vinegar 2, concentrated grape must 3 and extracts of natural origin 4 in the following weight concentrations:

| | |
|---|---|
| apple vinegar | 40 % |
| balsamic vinegar | 20 % |
| concentrated grape must | 35 % |
| extracts of natural origin | 5 % |

The mix thus obtained appears like a dark and dense liquid, dark red in colour, with a pleasant aromatized sweet and sour flavour.

Such mix is ready to be diluted in water, to form a drink having a dilution ratio between 1/3 and 1/7, i.e., wherein, one part of mix is to be found every two or six parts of water respectively.

Preferably, the mix is intended to be diluted in water with a dilution ratio of 1/5, i.e., one part of mix every four parts of water.

The process for obtaining the mix as it is described is schematically illustrated in figure 1 and comprises:
- providing the raw materials, i.e. apple vinegar 1, balsamic vinegar 2, grape must 3 and extracts of natural origin 4;
- mixing the apple vinegar 1, balsamic vinegar 2 and grape must 3;
- filtering the semi-finished product thus obtained;
- mixing the filtered semi-finished product with the extracts of natural origin 4;
- filtering the mix;
- storing the mix in a controlled atmosphere with inert gas;
- further filtering the mix; and
- bottling the mix.

The drink according to the invention is therefore meant to be introduced onto the market in the form of concentrated mix which the end user dilutes with water before using.

Alternatively, the mix can be diluted with water before bottling, in which case, the drink is placed on the market already suitably dosed and ready for consumption by users.

In this latter case, dilution can occur at the end of the process, immediately before bottling.

Alternatively, dilution occurs during mixing, adding water to the raw materials. It must be underlined, in any case, that the placing on the market of the drink already diluted preferably requires that the last filtration step immediately before bottling occur in conditions of sterility, to prevent the drink thus bottled from quickly deteriorating or altering its condition, taking into account its water content.

The undiluted mix has a Ph of around 3.

The undiluted mix, furthermore, has a brix degree of around 45 °Bx.

The diluted drink, on the other hand, has a Ph of around 3,4.

Finally, the brix degree of the diluted drink is around 14 °Bx.

## Claims

1. Drink, **characterized by** the fact that it consists of a mix diluted in water with a dilution ratio between 1/3 and 1/7;
wherein said mix in turn comprises apple vinegar (1), balsamic vinegar (2), concentrated grape must (3) and extracts of natural origin (4) in the following weight concentrations:
| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 %; |
and
wherein said extracts of natural origin (4) are selected from a list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin.

2. Drink according to claim 1, **characterized by** the fact that said balsamic vinegar (2) is of the PGI balsamic vinegar of Modena type.

3. Drink according to claim 1 or 2, **characterized by** the fact that said concentrated grape must (3) has a natural ratio of glucose and fructose substantially equal to 50%.

4. Drink according to one or more of the preceding claims, **characterized by** the fact that said mix consists of apple vinegar (1), balsamic vinegar (2), concentrated grape must (3) and extracts of natural origin (4) in the following weight concentrations:
| | |
|---|---|
| apple vinegar | 40 % |
| balsamic vinegar | 20 % |
| concentrated grape must | 35 % |
| extracts of natural origin | 5 %. |

5. Drink according to one or more of the preceding claims, **characterized by** the fact that said mix is diluted in water with a dilution ratio substantially equal to 1/5.

6. Process for obtaining from raw materials a mix for a drink, comprising the following steps:
- providing the raw materials to be mixed comprising apple vinegar (1), balsamic vinegar (2), concentrated grape must (3) and extracts of natural origin (4),
- mixing the apple vinegar (1), the balsamic vinegar (2) and the concentrated grape must (3);
- filtering the semi-finished product thus obtained;
- mixing the filtered semi-finished product with the extracts of natural origin (4),
- filtering the mix;
- storing the mix in a controlled atmosphere with inert gas;
- further filtering the mix; and
- bottling the mix;
wherein the mix, thus obtained, is provided for being diluted with water by a consumer so as to obtain the drink to be consumed;
wherein the mix comprises of apple vinegar (1), the balsamic vinegar (2), the concentrated grape must (3) and the extracts of natural origin (4) in the following weight concentrations:
| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 %; |
and
wherein said extracts of natural origin (4) are selected from a list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin.

7. Process for obtaining a drink according to any of claims 1 to 5, comprising the following steps:
- providing the raw materials to be mixed comprises apple vinegar (1), balsamic vinegar (2), concentrated grape must (3) and extracts of natural origin (4);
- mixing the apple vinegar (1), the balsamic vinegar (2) and the concentrated grape must (3);
- filtering the semi-finished product thus obtained;
- mixing the filtered semi-finished product with the extracts of natural origin (4);
- filtering the mix;
- storing the mix in a controlled atmosphere with inert gas;
- further filtering the mix;
- bottling the mix; and
- diluting the mix, thus obtained, with water by a consumer so as to obtain the drink to be consumed;
wherein the mix comprises apple vinegar (1), balsamic vinegar (2), the concentrated grape must (3) and the extracts of natural origin (4) in the following weight concentrations:
| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 %; |
wherein said extracts of natural origin (4) are selected from a list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin; and
wherein the mix diluted in water by the consumer with a dilution ratio between 1/3 and 1/7.

8. Process for obtaining a bottled drink according to any of claims 1 to 5, comprising the following steps:
- providing the raw materials to be mixed comprising apple vinegar (1), balsamic vinegar (2), concentrated grape must (3) and extracts of natural origin (4);
- mixing the apple vinegar (1), the balsamic vinegar (2) and the concentrated grape must (3);
- filtering the semi-finished product thus obtained;
- mixing the filtered semi-finished product with the extracts of natural origin (4);
- filtering the mix;
- diluting the mix, thus obtained, in water so as to obtain the drink; and
- bottling the drink.
wherein the mix comprises apple vinegar (1), balsamic vinegar (2), concentrated grape must (3) and extracts of natural origin (4) in the following weight concentrations:
| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 %; |
wherein said extracts of natural origin (4) are selected from a list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin; and
wherein the mix diluted in water for obtaining the drink to be bottled with a dilution ratio between 1/3 and 1/7.

9. Process for obtaining a bottled drink according to any of claims 1 to 5, comprising the following steps:
- providing the raw materials to be mixed comprising apple vinegar (1), balsamic vinegar (2), concentrated grape must (3) and extracts of natural origin (4);
- mixing the apple vinegar (1), the balsamic vinegar (2), the concentrated grape must (3), and the extracts of natural origin (4), while diluting in the same time this mix in water, so as to obtain the drink; and
- bottling the drink thus obtained.
wherein the mix comprises apple vinegar (1), the balsamic vinegar (2), the concentrated grape must (3) and the extracts of natural origin (4) in the following weight concentrations:
| | |
|---|---|
| apple vinegar | 30 ÷ 50 % |
| balsamic vinegar | 15 ÷ 25 % |
| concentrated grape must | 25 ÷ 45 % |
| extracts of natural origin | 0 ÷ 10 %; |
wherein said extracts of natural origin (4) are selected from a list comprising: blueberry extracts, strawberry extracts, pomegranate extracts, raspberry extracts, cherry extracts, grape extracts, tangerine extracts, lemon extracts, orange extracts, green tea extracts, extracts with high contents of bio-phenols of oenological origin; and
wherein the mix diluted in water for obtaining the drink to be bottled with a dilution ratio between 1/3 and 1/7.

## Patentansprüche

1. Getränk, **gekennzeichnet durch** die Tatsache, dass es aus einem Gemisch besteht, das in Wasser mit einem Verdünnungsverhältnis zwischen 1/3 und 1/7 verdünnt ist;
wobei das Gemisch wiederum umfasst:
Apfelessig (1), Balsamessig (2), konzentrierten Traubenmost (3) und Extrakte natürlichen Ursprungs (4) in den folgenden Gewichtskonzentrationen:
| | |
|---|---|
| Apfelessig | 30 ÷ 50 % |
| Balsamessig | 15 ÷ 25 %, |
| konzentrierter Traubenmost | 25 ÷ 45 % |
| Extrakte natürlichen Ursprungs | 0 ÷ 10 %; |
und
wobei die Extrakte natürlichen Ursprungs (4) aus einer Liste ausgewählt sind, die umfasst: Heidelbeerextrakte, Erdbeerextrakte, Granatapfelextrakte, Himbeerextrakte, Kirschextrakte, Traubenextrakte, Mandarinenextrakte, Zitronenextrakte, Orangenextrakte, Grünteeextrakte, Extrakte mit hohen Gehalten an Biophenolen önologischen Ursprungs.

2. Getränk nach Anspruch 1, **gekennzeichnet durch** die Tatsache, dass der Balsamessig (2) vom Typ PGI-Balsamessig von Modena ist.

3. Getränk nach Anspruch 1 oder 2, **gekennzeichnet durch** die Tatsache, dass der konzentrierte Traubenmost (3) ein natürliches Verhältnis von Glucose und Fructose im Wesentlichen gleich 50 % aufweist.

4. Getränk nach einem der vorhergehenden Ansprüche, **gekennzeichnet durch** die Tatsache, dass das Gemisch aus Apfelessig (1), Balsamessig (2), konzentriertem Traubenmost (3) und Extrakten natürlichen Ursprungs (4) in den folgenden Gewichtskonzentrationen besteht:
| | |
|---|---|
| Apfelessig | 40 % |
| Balsamessig | 20 %, |
| konzentrierter Traubenmost | 35 % |
| Extrakte natürlichen Ursprungs | 5 %. |

5. Getränk nach einem oder mehreren der vorhergehenden Ansprüche, **gekennzeichnet durch** die Tatsache, dass das Gemisch in Wasser mit einem Verdünnungsverhältnis im Wesentlichen gleich 1/5 verdünnt ist.

6. Verfahren zum Erhalten eines Gemisches aus Rohmaterialien für ein Getränk, umfassend die folgenden Schritte:
- Bereitstellen der zu mischenden Rohmaterialien, umfassend Apfelessig (1), Balsamessig (2), konzentrierten Traubenmost (3) und Extrakte natürlichen Ursprungs (4)
- Mischen des Apfelessigs (1), des Balsamessigs (2) und des konzentrierten Traubenmosts (3) ;
- Filtrieren des so erhaltenen halbfertigen Produkts;
- Mischen des filtrierten halbfertigen Produkts mit den Extrakten natürlichen Ursprungs (4);
- Filtrieren des Gemischs;
- Aufbewahren des Gemischs in einer regulierten Atmosphäre mit inertem Gas;
- weiteres Filtrieren des Gemischs; und
- Einfüllens des Gemischs in Flaschen;
wobei das so erhaltene Gemisch zum Verdünnen mit Wasser durch einen Konsumenten bereitgestellt wird, um ein zu konsumierendes Getränk zu erhalten;
wobei das Gemisch Apfelessig (1), Balsamessig (2), konzentriertem Traubenmost (3) und den Extrakten natürlichen Ursprungs (4) in den folgenden Gewichtskonzentrationen umfasst:
| | |
|---|---|
| Apfelessig | 30 ÷ 50 % |
| Balsamessig | 15 ÷ 25 %, |
| konzentrierter Traubenmost | 25 ÷ 45 % |
| Extrakte natürlichen Ursprungs | 0 ÷ 10 %; |
und
wobei die Extrakte natürlichen Ursprungs (4) aus einer Liste ausgewählt sind, die umfasst: Heidelbeerextrakte, Erdbeerextrakte, Granatapfelextrakte, Himbeerextrakte, Kirschextrakte, Traubenextrakte, Mandarinenextrakte, Zitronenextrakte, Orangenextrakte, Grünteeextrakte, Extrakte mit hohen Gehalten an Biophenolen önologischen Ursprungs.

7. Verfahren zum Erhalten eines Getränks nach einem der Ansprüche 1 bis 5, umfassend die folgenden Schritte:
- Bereitstellen der zu mischenden Rohmaterialien, umfassend Apfelessig (1), Balsamessig (2), konzentrierten Traubenmost (3) und Extrakte natürlichen Ursprungs (4)
- Mischen des Apfelessigs (1), des Balsamessigs (2) und des konzentrierten Traubenmosts (3);
- Filtrieren des so erhaltenen halbfertigen Produkts;
- Mischen des filtrierten halbfertigen Produkts mit den Extrakten natürlichen Ursprungs (4);
- Filtrieren des Gemischs;
- Aufbewahren des Gemischs in einer regulierten Atmosphäre mit inertem Gas;
- weiteres Filtrieren des Gemischs;
- Einfüllen des Gemischs in Flaschen; und
- Verdünnen des so erhaltenen Gemischs mit Wasser durch einen Konsumenten, um ein zu konsumierendes Getränk zu erhalten;
wobei das Gemisch Apfelessig (1), Balsamessig (2), den konzentrierten Traubenmost (3) und die Extrakte natürlichen Ursprungs (4) in den folgenden Gewichtskonzentrationen umfasst:
| | |
|---|---|
| Apfelessig | 30 ÷ 50 % |
| Balsamessig | 15 ÷ 25 %, |
| konzentrierter Traubenmost | 25 ÷ 45 % |
| Extrakte natürlichen Ursprungs | 0 ÷ 10 %; |
wobei die Extrakte natürlichen Ursprungs (4) aus einer Liste ausgewählt sind, die umfasst: Heidelbeerextrakte, Erdbeerextrakte, Granatapfelextrakte, Himbeerextrakte, Kirschextrakte, Traubenextrakte, Mandarinenextrakte, Zitronenextrakte, Orangenextrakte, Grünteeextrakte, Extrakte mit hohen Gehalten an Biophenolen önologischen Ursprungs; und
wobei das Gemisch durch den Konsumenten in Wasser mit einem Verdünnungsverhältnis zwischen 1/3 und 1/7 verdünnt wird.

8. Verfahren zum Erhalten eines in Flaschen abgefüllten Getränks nach einem der Ansprüche 1 bis 5, umfassend die folgenden Schritte:
- Bereitstellen der zu mischenden Rohmaterialien umfassend Apfelessig (1), Balsamessig (2), konzentrierten Traubenmost (3) und Extrakte natürlichen Ursprungs (4):
- Mischen des Apfelessigs (1), des Balsamessigs (2) und des konzentrierten Traubenmosts (3);
- Filtrieren des so erhaltenen halbfertigen Produkts;
- Mischen des filtrierten halbfertigen Produkts mit den Extrakten natürlichen Ursprungs (4);
- Filtrieren des Gemischs;
- Verdünnen des so erhaltenen Gemischs in Wasser, um das Getränk zu erhalten; und
- Füllen des Getränks in Flaschen,
wobei das Gemisch Apfelessig (1), Balsamessig (2), konzentrierten Traubenmost (3) und Extrakte natürlichen Ursprungs (4) in den folgenden Gewichtskonzentrationen umfasst:
| | |
|---|---|
| Apfelessig | 30 ÷ 50 % |
| Balsamessig | 15 ÷ 25 %, |
| konzentrierter Traubenmost | 25 ÷ 45 % |
| Extrakte natürlichen Ursprungs | 0 ÷ 10 %; |
wobei die Extrakte natürlichen Ursprungs (4) aus einer Liste ausgewählt sind, die umfasst: Heidelbeerextrakte, Erdbeerextrakte, Granatapfelextrakte, Himbeerextrakte, Kirschextrakte, Traubenextrakte, Mandarinenextrakte, Zitronenextrakte, Orangenextrakte, Grünteeextrakte, Extrakte mit hohen Gehalten an Biophenolen önologischen Ursprungs; und
wobei das Gemisch in Wasser verdünnt wird, um das in Flaschen zu füllende Getränk mit einem Verdünnungsverhältnis zwischen 1/3 und 1/7 zu erhalten.

9. Verfahren zum Erhalten eines in Flaschen gefüllten Getränks nach einem der Ansprüche 1 bis 5, umfassend die folgenden Schritte:
- Bereitstellen der zu mischenden Rohmaterialien umfassend Apfelessig (1), Balsamessig (2), konzentrierten Traubenmost (3) und Extrakte natürlichen Ursprungs (4);
- Mischen des Apfelessigs (1), des Balsamessigs (2), des konzentrierten Traubenmosts (3) und der Extrakte natürlichen Ursprungs (4), während des gleichzeitigen Verdünnens dieses Gemischs in Wasser, um das Getränk zu erhalten; und
- Füllen des so erhaltenen Getränks in Flaschen,
wobei das Gemisch Apfelessig (1), Balsamessig (2), den konzentrierten Traubenmost (3) und die Extrakte natürlichen Ursprungs (4) in den folgenden Gewichtskonzentrationen umfasst:
| | |
|---|---|
| Apfelessig | 30 ÷ 50 % |
| Balsamessig | 15 ÷ 25 %, |
| konzentrierter Traubenmost | 25 ÷ 45 % |
| Extrakte natürlichen Ursprungs | 0 ÷ 10 %; |
wobei die Extrakte natürlichen Ursprungs (4) aus einer Liste ausgewählt sind umfassend: Heidelbeerextrakte, Erdbeerextrakte, Granatapfelextrakte, Himbeerextrakte, Kirscheextrakte, Traubenextrakte, Mandarinenextrakte, Zitronenextrakte, Orangenextrakte, Grünteeextrakte, Extrakte mit hohen Gehalten an Biophenolen önologischen Ursprungs; und
wobei das Gemisch in Wasser verdünnt wird, um das in Flaschen zu füllende Getränk mit einem Verdünnungsverhältnis zwischen 1/3 und 1/7 zu erhalten.

## Revendications

1. Boisson, **caractérisée par le fait qu'**elle consiste en un mélange dilué dans de l'eau avec un ratio de dilution entre 1/3 et 1/7 ;
dans laquelle ledit mélange comprend du vinaigre de cidre (1), du vinaigre balsamique (2), du moût de raisin concentré (3) et des extraits d'origine naturelle (4) dans les concentrations en poids suivantes :
| | |
|---|---|
| vinaigre de cidre | 30 ÷ 50 % |
| vinaigre balsamique | 15 ÷ 25 % |
| moût de raisin concentré | 25 ÷ 45 % |
| extraits d'origine naturelle | 0 ÷ 10 % ; |
et
dans laquelle lesdits extraits d'origine naturelle (4) sont sélectionnés dans une liste comprenant : des extraits de myrtille, des extraits de fraise, des extraits de grenade, des extraits de framboise, des extraits de cerise, des extraits de raisin, des extraits de mandarine, des extraits de citron, des extraits d'orange, des extraits de thé vert, des extraits ayant des teneurs élevées en bio-phénols d'origine oenologique.

2. Boisson selon la revendication 1, **caractérisée par le fait que** ledit vinaigre balsamique (2) est du vinaigre balsamique IGP de type de Modène.

3. Boisson selon la revendication 1 ou 2, **caractérisée par le fait que** ledit moût de raisin concentré (3) a un ratio naturel du glucose et du fructose sensiblement égal à 50 %.

4. Boisson selon une ou plusieurs des revendications précédentes, **caractérisée par le fait que** ledit mélange consiste en vinaigre de cidre (1), vinaigre balsamique (2), moût de raisin concentré (3) et extraits d'origine naturelle (4) dans les concentrations en poids suivantes :
| | |
|---|---|
| vinaigre de cidre | 40 % |
| vinaigre balsamique | 20 % |
| moût de raisin concentré | 35 % |
| extraits d'origine naturelle | 5 %. |

5. Boisson selon une ou plusieurs des revendications précédentes, **caractérisée par le fait que** ledit mélange est dilué dans de l'eau en un ratio de dilution sensiblement égal à 1/5.

6. Procédé pour obtenir à partir de matières premières, un mélange pour une boisson, comprenant les étapes suivantes :
- la fourniture des matières premières à mélanger comprenant du vinaigre de cidre (1), du vinaigre balsamique (2), du moût de raisin concentré (3) et des extraits d'origine naturelle (4),
- le mélange du vinaigre de cidre (1), du vinaigre balsamique (2) et du moût de raisin concentré (3) ;
- le filtrage du produit semi-fini ainsi obtenu ;
- le mélange du produit semi-fini filtré avec les extraits d'origine naturelle (4),
- le filtrage du mélange ;
- le stockage du mélange dans une atmosphère contrôlée avec du gaz inerte ;
- le filtrage supplémentaire du mélange ; et
- la mise en bouteille du mélange ;
dans lequel le mélange ainsi obtenu est fourni pour être dilué avec de l'eau par un consommateur de façon à obtenir la boisson à consommer ;
dans lequel le mélange comprend le vinaigre de cidre (1), le vinaigre balsamique (2), le moût de raisin concentré (3) et les extraits d'origine naturelle (4) dans les concentrations en poids suivantes :
| | |
|---|---|
| vinaigre de cidre | 30 ÷ 50 % |
| vinaigre balsamique | 15 ÷ 25 % |
| moût de raisin concentré | 25 ÷ 45 % |
| extraits d'origine naturelle | 0 ÷ 10 % ; |
et
dans lequel lesdits extraits d'origine naturelle (4) sont sélectionnés dans une liste comprenant : des extraits de myrtille, des extraits de fraise, des extraits de grenade, des extraits de framboise, des extraits de cerise, des extraits de raisin, des extraits de mandarine, des extraits de citron, des extraits d'orange, des extraits de thé vert, des extraits ayant des teneurs élevées en bio-phénols d'origine oenologique.

7. Procédé pour obtenir une boisson selon l'une quelconque des revendications 1 à 5, comprenant les étapes suivantes :
- la fourniture des matières premières à mélanger comprenant du vinaigre de cidre (1), du vinaigre balsamique (2), du moût de raisin concentré (3) et des extraits d'origine naturelle (4),
- le mélange du vinaigre de cidre (1), du vinaigre balsamique (2) et du moût de raisin concentré (3) ;
- le filtrage du produit semi-fini ainsi obtenu ;
- le mélange du produit semi-fini filtré avec les extraits d'origine naturelle (4),
- le filtrage du mélange ;
- le stockage du mélange dans une atmosphère contrôlée avec du gaz inerte ;
- le filtrage supplémentaire du mélange ;
- la mise en bouteille du mélange ; et
- la dilution du mélange ainsi obtenu, avec de l'eau par un consommateur, de façon à obtenir la boisson à consommer ;
dans lequel le mélange comprend le vinaigre de cidre (1), le vinaigre balsamique (2), le moût de raisin concentré (3) et les extraits d'origine naturelle (4) dans les concentrations en poids suivantes :
| | |
|---|---|
| vinaigre de cidre | 30 ÷ 50 % |
| vinaigre balsamique | 15 ÷ 25 % |
| moût de raisin concentré | 25 ÷ 45 % |
| extraits d'origine naturelle | 0 ÷ 10 % ; |
dans lequel lesdits extraits d'origine naturelle (4) sont sélectionnés dans une liste comprenant : des extraits de myrtille, des extraits de fraise, des extraits de grenade, des extraits de framboise, des extraits de cerise, des extraits de raisin, des extraits de mandarine, des extraits de citron, des extraits d'orange, des extraits de thé vert, des extraits ayant des teneurs élevées en bio-phénols d'origine oenologique ; et
dans lequel le mélange est dilué dans de l'eau par le consommateur avec un ratio de dilution entre 1/3 et 1/7.

8. Procédé pour obtenir une boisson en bouteille selon l'une quelconque des revendications 1 à 5, comprenant les étapes suivantes :
- la fourniture des matières premières à mélanger comprenant du vinaigre de cidre (1), du vinaigre balsamique (2), du moût de raisin concentré (3) et des extraits d'origine naturelle (4),
- le mélange du vinaigre de cidre (1), du vinaigre balsamique (2) et du moût de raisin concentré (3) ;
- le filtrage du produit semi-fini ainsi obtenu ;
- le mélange du produit semi-fini filtré avec les extraits d'origine naturelle (4),
- le filtrage du mélange ;
- la dilution du mélange ainsi obtenu, avec de l'eau, de façon à obtenir la boisson ; et
- la mise en bouteille de la boisson,
dans lequel le mélange comprend le vinaigre de cidre (1), le vinaigre balsamique (2), le moût de raisin concentré (3) et les extraits d'origine naturelle (4) dans les concentrations en poids suivantes :
| | |
|---|---|
| vinaigre de cidre | 30 ÷ 50 % |
| vinaigre balsamique | 15 ÷ 25 % |
| moût de raisin concentré | 25 ÷ 45 % |
| extraits d'origine naturelle | 0 ÷ 10 % ; |
dans lequel lesdits extraits d'origine naturelle (4) sont sélectionnés dans une liste comprenant : des extraits de myrtille, des extraits de fraise, des extraits de grenade, des extraits de framboise, des extraits de cerise, des extraits de raisin, des extraits de mandarine, des extraits de citron, des extraits d'orange, des extraits de thé vert, des extraits ayant des teneurs élevées en bio-phénols d'origine oenologique ; et
dans lequel le mélange est dilué dans de l'eau pour obtenir la boisson à mettre en bouteille avec un ratio de dilution entre 1/3 et 1/7.

9. Procédé pour obtenir une boisson mise en bouteille selon l'une quelconque des revendications 1 à 5, comprenant les étapes suivantes :
- la fourniture des matières premières à mélanger comprenant du vinaigre de cidre (1), du vinaigre balsamique (2), du moût de raisin concentré (3) et des extraits d'origine naturelle (4),
- le mélange du vinaigre de cidre (1), du vinaigre balsamique (2), du moût de raisin concentré (3) et des extraits d'origine naturelle (4) tout en diluant en même temps ce mélange dans de l'eau de façon à obtenir la boisson ; et
- la mise en bouteille de la boisson ainsi obtenue,
dans lequel le mélange comprend du vinaigre de cidre (1), du vinaigre balsamique (2), du moût de raisin concentré (3) et des extraits d'origine naturelle (4) dans les concentrations en poids suivantes :
| | |
|---|---|
| vinaigre de cidre | 30 ÷ 50 % |
| vinaigre balsamique | 15 ÷ 25 % |
| moût de raisin concentré | 25 ÷ 45 % |
| extraits d'origine naturelle | 0 ÷ 10 % ; |
dans lequel lesdits extraits d'origine naturelle (4) sont sélectionnés dans une liste comprenant : des extraits de myrtille, des extraits de fraise, des extraits de grenade, des extraits de framboise, des extraits de cerise, des extraits de raisin, des extraits de mandarine, des extraits de citron, des extraits d'orange, des extraits de thé vert, des extraits ayant des teneurs élevées en bio-phénols d'origine oenologique ; et
dans lequel le mélange est dilué dans de l'eau pour obtenir la boisson à mettre en bouteille avec un ratio de dilution entre 1/3 et 1/7.
